# EUROPEAN PATENT SPECIFICATION

(11) **EP 4 095 856 B1**
(45) Date of publication and mention of the grant of the patent: **11.09.2024**
(21) Application number: 21175799.2
(22) Date of filing: 25.05.2021
(51) Int. Cl.: G11B 15/68, G11B 17/22, B65G 1/04

(54) **STORAGE LIBRARY SYSTEM**
SPEICHERBIBLIOTHEKSYSTEM
SYSTÈME DE BIBLIOTHÈQUE DE STOCKAGE

(43) Date of publication of application: 30.11.2022
(73) Proprietor: Microsoft Technology Licensing, LLC, Redmond, WA 98052-6399 (US)
(72) Inventor: SWEENEY, David, Redmond, 98052-6399 (US); CHATZIELEFTHERIOU, Andromachi, Redmond, 98052-6399 (US); ROWSTRON, Antony Ian Taylor, Redmond, 98052-6399 (US); WILLIAMS, Hugh, Redmond, 98052-6399 (US); BLACK, Richard John, Redmond, 98052-6399 (US); JOYCE, Russell, Redmond, 98052-6399 (US)
(74) Representative: Page White Farrer

(56) References cited:
- EP-A2- 1 056 086
- US-A1- 2003 112 717
- US-A1- 2003 113 193
- US-A1- 2017 101 263
- US-A1- 2021 009 350

## Description

### Technical Field

The present disclosure relates to a storage library system.

### Background

A storage library system can provide high-capacity storage of items (including, but not limited to, physical media items). A storage library system comprises a plurality of slots for holding the items, and at least one robotic means of accessing the items. For example, a storage library system may comprise a plurality of rows, each row comprising tens or hundreds of slots, stacked vertically. One or more robots may be provided which can move between slots to e.g. retrieve an item from a slot, place an item in a slot, or migrate an item between two slots.

A storage library system storing physical media items may be referred to as a "data storage library system", or a "data archive". A data storage library system storing tape cartridges is commonly called a "tape library" (aka a tape silo or tape jukebox). A data storage library system storing optical discs (e.g. CDs, DVDs, etc.) is commonly called an "optical jukebox" (aka an optical disc library).

EP1056086A2 discloses a modular data storage system for handling and storing data cartridges.

US2003/113193A1 discloses a library comprising a plurality of media storage cells and at least one media picker robot.

US2003/112717A1 discloses a plurality of storage cell rows and a plurality of robots coupled to guide rails, which allow the robots to move along the rows of storage cells. The robots have displacement mechanisms that allow the pickers to move between rows of storage cells.

US2017/101263A1 discloses an operating vehicle for transporting a storage container along a storage rack.

US2021/009350A1 discloses a direction switching module for lift robots using a pair of pinions coupled to a rack for propelling vertically and horizontally according to the track's orientation.

### Summary

According to a first aspect disclosed herein, there is provided a storage library system comprising: a plurality of slots for storing items; a plurality of rails; and a robot for interacting with said items. The robot comprises: at least one end-effector (e.g. a reader, a grabber or other actuator) for interacting with items in the slots; at least two foot arrangements; and a transfer mechanism. Each foot arrangement comprises a respective gripping mechanism for releasably engaging that foot arrangement with one of the rails. The robot also comprises a drive mechanism for moving the robot along the rails. The transfer mechanism is constructed and arranged to move the robot, while a first one or more of the foot arrangements remains engaged with a first of the rails, from a first position in which one or more of the foot arrangements is in abutment with a second of the rails to a second position in which one or more of the foot arrangements is in abutment with a third of the rails.

In the first position, the robot is able to access a first set of one or more slots (i.e. a first position of the storage library system). In the second position, the robot is able to access a second set of one or more slots (i.e. a second position of the storage library system). The second set of slots comprises at least one slot which was not accessible by the robot in the first position. Hence, transferring the robot between positions allows the robot to access more of the slots.

There may be at least one localization feature (e.g. an RFID tag or an optical, magnetic, or capacitive marking) present for allowing the robot to determine its location in the storage library system. Moving the robot from the first position to the second position may comprise one or more of: rotating the robot about the second foot out of the plane of the rails, rotating the robot about the second foot in the plane of the rails, and translating the robot in the plane of the rails. The storage library system may comprise a plurality or "swarm" of similar robots.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein. The scope and limits of the application are defined by the appended claims.

### Brief Description of the Drawings

To assist understanding of the present disclosure and to show how embodiments may be put into effect, reference is made by way of example to the accompanying drawings in which:
Figure 1 shows schematically a storage library system in accordance with an example described herein;
Figure 2 shows schematically a robot in accordance with an example described herein;
Figure 3 shows a flow chart illustrating a transfer action performable by the robot;
Figure 4 shows schematically an example of a transfer action performable by the robot;
Figure 5 shows schematically an example storage library system having a plurality of robots;
Figure 6 shows schematically an example passing motion of two robots;
Figure 7 shows schematically another example of a transfer action performable by the robot;
Figure 8 shows schematically another example of a transfer action performable by the robot;
Figure 9 shows schematically another example of a transfer action performable by the robot;
Figures 10a and 10b show schematically example storage library system arrangements;
Figure 11 shows an example arrangement of slots of a storage library system;
Figure 12 shows an example arrangement of slots of a storage library system;
Figure 13 shows schematically an example of a Gray code printed on one side of a rail;
Figure 14 shows schematically a specific example of a foot arrangement;
Figures 15a and 15b show schematically a specific example of a gripping mechanism in an open and a closed state, respectively; and
Figure 16 shows schematically a specific example of a transfer mechanism.

### Detailed Description

The present disclosure relates to a storage library system (e.g. a data storage library system) having a plurality of rails on which robots can run. Each robot can move along the length of the rails to access items at different locations in the storage library system. Some, but not all locations are accessible from a given rail. As will be described in detail below, the robot comprises hardware enabling the robot itself to transfer between different rails and thereby access more locations within the storage library system. Even without performing a "complete" transfer between different rails, the same hardware still enables the robot to move relative to at least one rail (e.g. the robot might move out of the way to let another robot pass). Examples described herein provide one or more of the following advantages:
- HIGHER AVAILABILITY & MINIMAL FAILURE EFFECT RADIUS - the robots aren't confined to a single pair of rails. Any failure of a robot, or a pair of rails, etc. doesn't result in failure for the remaining robots on that rail, they can move freely on & off unaffected sections, and avoid points-of-failures by overtaking failed robots/sections of rail.
- DISTRIBUTED INTELLIGENCE - In some examples, the robots may be autonomous, which means that they are able to react more efficiently to the environment changing around them, adding an extra layer of safety. Onboard processing of sensors avoids the need to stream sensor data over high-bandwidth communication channels from the robots to controllers, improving reliability and enabling larger swarms.
- FLEXIBLE LAYOUT & RELIABLE STORAGE - The functional elements in the storage library system (e.g. writers, readers, storage units, etc.) are unified through a network of rails which robots use to transit. There are no constraints to how these are connected to each other (different arrangements will be better suited in different situations) because the robots can transfer between rails. The modularity provides elasticity and the ability to scale up the system (e.g. to increase read/write throughput and/or the storage capacity of the system) based on the workload properties. Moreover, robots can be fetched independently. That is, the robotics may be scaled up independently from the storage, by adding more robots as needed as the workload increases.
- COMPACT, LIGHT & AGILE ROBOT DESIGN - moving along a single axis rather than supporting multiple axes allows the robots to be smaller, lighter, require fewer specialised actuators and mechanics and operate using less power.
- SERVICE FLEXIBILITY - During normal operation, this fact that the robots can transfer between different rails means that ANY robot can access ANY piece of media or any read / write drive in the library. This facilitates load balancing according to the workload demand. This feature also enables additional routing options, improving access to media in situations where there is elevated congestion (traditional tape library robots have only one route available between any item of media and drive i.e. via one of the few robots, a bottleneck).
- HIGH PERFORMANCE - Disaggregating the functions of mounting/unmounting from picking/delivery allows for media to be prepared at a location adjacent to a drive (where congestion of robots could be an issue) and expedite the swapping of media. This maximises the utilisation of the drives and improves their efficiency. The splitting of functions also allows for designs which are specialised for their tasks, enabling high performance and high reliability.

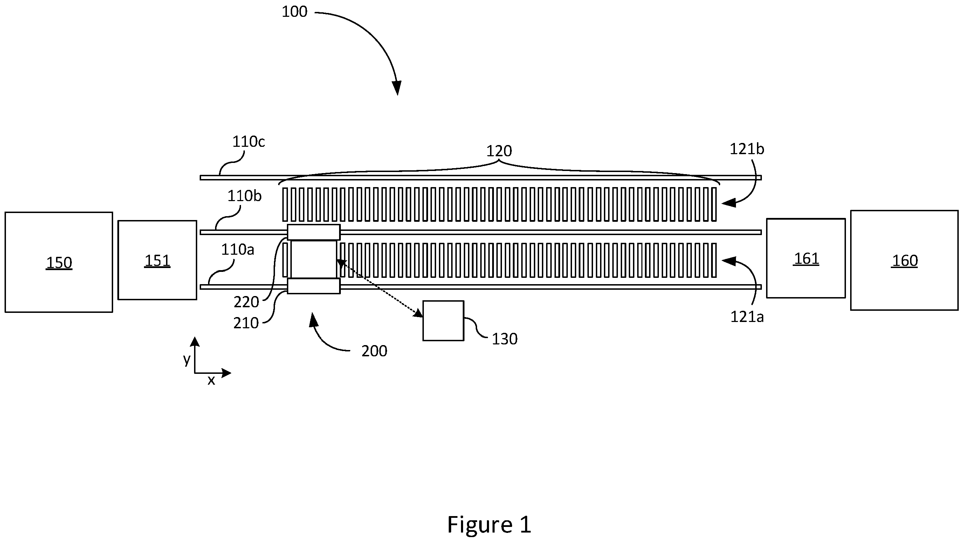

Figure 1 shows schematically a storage library system 100 in accordance with examples described herein. The storage library system 100 comprises a plurality of slots 120 for holding items, at least one robot 200 (also called a "shuttle"), and a plurality of rails 110. An optional central control system 130 is also shown in Figure 1 - in other examples, the functionality of the control system 130 may be implemented in a decentralized manner across a plurality of robots 200, e.g. there could also be a distributed control system, or in a fully autonomous system the robots could coordinate with each other in a distributed manner.

In operation, the robot 200 uses the rails 110 to move around the storage library system 100 to access items stored in the slots 120. Each of the rails 110 may be substantially the same in construction, allowing the robot 200 to run on any one or more of the rails 110 at a given time. The rails 110 may be parallel rails (equidistant pairs).

It will be appreciated that the exact arrangement and number of slots 120 and rails 110 can vary. In this example, the slots 120 are arranged in horizontal rows 121, with a horizontal rail 110 being located between each row 121. Specifically, a first row 121a of slots 120 is located between a first rail 110a and a second rail 110b, and a second row 121b of slots 120 is located between the second rail 110b and a third rail 110c.

For reference, a right-handed coordinate system is introduced in which the rails 110 lie in the x-y plane, with the x-axis being parallel with the rails 110 and the y-axis being perpendicular to the rails 110. The z-axis can be seen in later figures and extends away from the plane of the rails 110 (out of the page in Figure 1). The side of the slots 120 on which the robot 200 runs may be referred to as the "front".

When at least some of the items held in the slots 120 are physical storage media, at least one write drive 150 for writing to the physical storage media and/or at least one read drive 160 for reading from the physical storage media may be provided as shown in Figure 1.

The robot 200 may migrate a given physical storage media to a write drive 150 where that physical storage media can be written to. Specifically, when a particular media item is written to using the write drive 150, the robot 200 may migrate the media item from the write drive 150 to a slot 120 for storage.

The robot 200 may migrate a given physical storage media to the read drive 160 where that physical storage media can be read. Specifically, the robot 200 may migrate a particular media item between a slot 120 and the read drive 160 to enable the data written to that media item to be read.

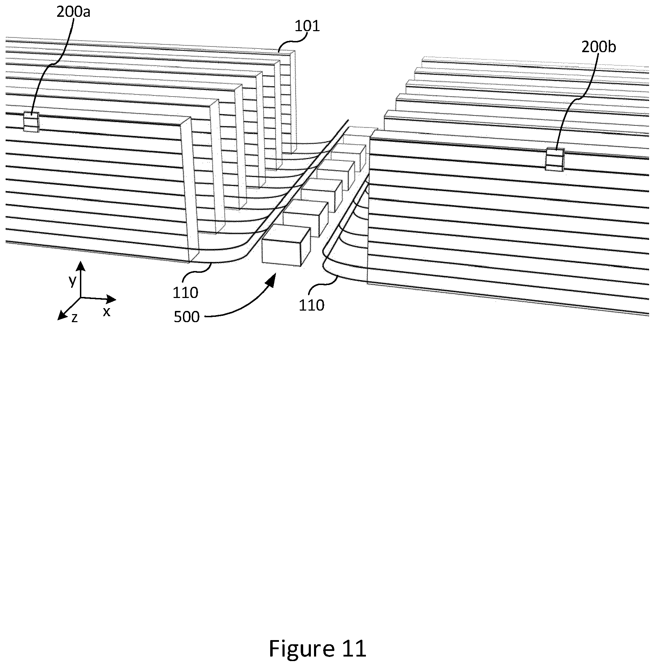

In examples, there may be a plurality of write drives 150 (e.g. one per row 121) and/or a plurality of read drives 160 (e.g. one per row 121). For performance reasons, it may be preferably to locate the read drive(s) 160 close to the slots 120. In examples writing media may have looser latency requirements so it may be acceptable to have the write drive(s) 150 located further from the slots 120 than the read drive(s) 160 (e.g. remote from the storage system 100). In other examples, there may be different numbers of write drives 150 and read drives 160, e.g. there may be a read drive 160 on every row 121, but only one or two write drives 150 (e.g. located on the bottom row 121). An example is shown in Figure 11 discussed later below.

A write drive interface 151 may be included allowing the robot 200 to interface with the write drive 150. A read drive interface 161 may be included allowing the robot 200 to interface with the read drive 160. For example, the interfaces 151, 161 may serve as a staging area for media to be read, i.e. the robot 200 may "drop off" physical storage media at the interface 151, 161 to be added to a queue to be written/read later. This means that the robot 200 can return to the slots 120 and continue working.

In the example of Figure 1, the write drive 150 and read drive 160 are separate units, but it is appreciated that a single drive could be provided for performing both write and read operations.

In examples, one or more of the write drive 150, read drive 160, or a single drive for performing both write and read operations may be comprised in the robot 200 itself. For example, the end-effector 240 of the robot 200 itself may comprise a write drive and/or read drive. In such examples, some or all of the migration described above is unnecessary. For example, the robot 200 may comprise an "internal" write drive 150 which means that the robot 200 itself can write to a given physical storage media and does not need to migrate it to an external write drive 150 (although it might still need to migrate it to an external read drive 160 if the robot 200 does not also include an internal read drive 160). Similarly, the robot 200 may comprise an "internal" read drive 160 which means that the robot 200 itself can read from a given physical storage media and does not need to migrate it to an external read drive 160 (although it might still need to migrate it to an external write drive 150 if the robot 200 does not also include an internal write drive 150). A robot 200 comprising both an internal write drive 150 and internal read drive 160 (or a single read-write drive) may not need to migrate the physical storage media at all (though it is not excluded because, for example, the robot 200 may still migrate physical storage media for other purposes such as maintenance).

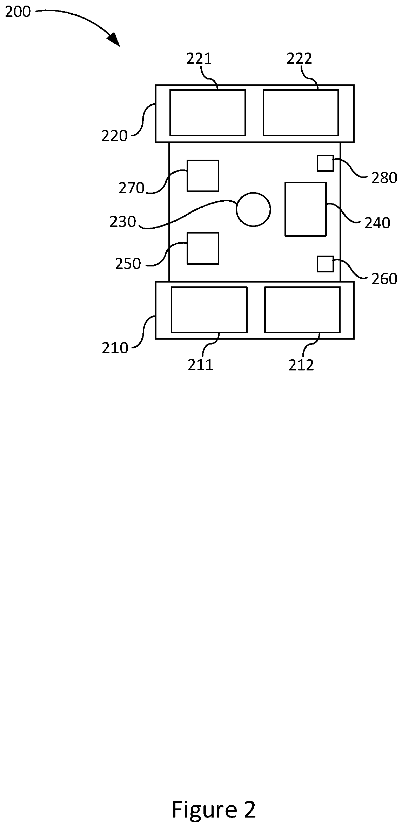

A more detailed example of the robot 200 is shown in Figure 2. The robot 200 comprises a first foot arrangement 210, a second foot arrangement 220, a transfer mechanism 230, an end-effector 240.

In this example, the robot 200 also comprises, a controller 250, a communication interface 260, a power supply 270, and a sensing system 280. These are optional features. As mentioned above, the robot 200 may also comprise one or more of a write drive 150 and a read drive 160 (or a single drive providing both write and read functionality).

The controller 250 is for controlling the first foot arrangement 210, second foot arrangement 220, transfer mechanism 230, and end-effector 240. The controller 250 may be implemented, for example, using one or more processors. In examples, the functionality of the central control system 130 shown in Figure 1(and described in more detail below) may instead be implemented in a distributed fashion across one or more robots 200, with each robot 200 using its internal controller 250.

The communications interface 260 allows the robot 200 to receive data from and/or send data via a communication link (illustrated with a dotted arrow in Figure 1). In some examples, the robot 200 may receive routing information from the control system 130. In alternative or additional examples, the robot 200 may communicate with one or more other robots as part of a mesh network. Preferably, the communication link is a wireless communication link, but it is not excluded that the communication link is a wired communication link. A wireless communication link is particular advantageous when the robot 200 comprises an internal power supply 270, because then the robot 200 may be untethered from the control system 130 and can move freely throughout the library. In examples, the robot 200 may use e.g. low-friction components, regenerative braking to save power.

The power supply 270 is for powering the robot 200. In a first example, the power supply 270 may be an internal power supply of the robot 200, such as an on-board battery. An advantage of this is that the robot 200 does not require a connection to an external power supply. In other examples, the robot 200 may not comprise a power supply 270 of its own, and may instead receive power from an external power supply via a wired or wireless connection. Advantages of this include that the robot 200 does not require an on-board power supply 270 and can be made smaller and/or lighter, and that the robot 200 does not need re-charging. In a specific example, the robot 200 may receive power via the rails 110.

The sensing system 280 allows the robot 200 to determine its location within the storage library system 100. Examples of localization will be described later. The sensing system 280 for example may comprise one or more optical sensors.

The first foot arrangement 210 comprises a first gripping mechanism 211 for releasably engaging the first foot arrangement 210 with one of the rails 110. The second foot arrangement 220 comprises a second gripping mechanism 221 for releasably engaging the second foot arrangement 220 with one of the rails 110. The distance between the foot arrangements 210, 220 is substantially equal to the distance between adjacent pairs of rails 110. Hence, if the first foot arrangement 210 is engaged with one of the rails 110, the second foot arrangement 220 may engage with an adjacent one of the rails 110. The Figure 1, for example, the first foot arrangement 210 is engaged with the first rail 110a and the second foot arrangement 220 is engaged with the second rail 110b.

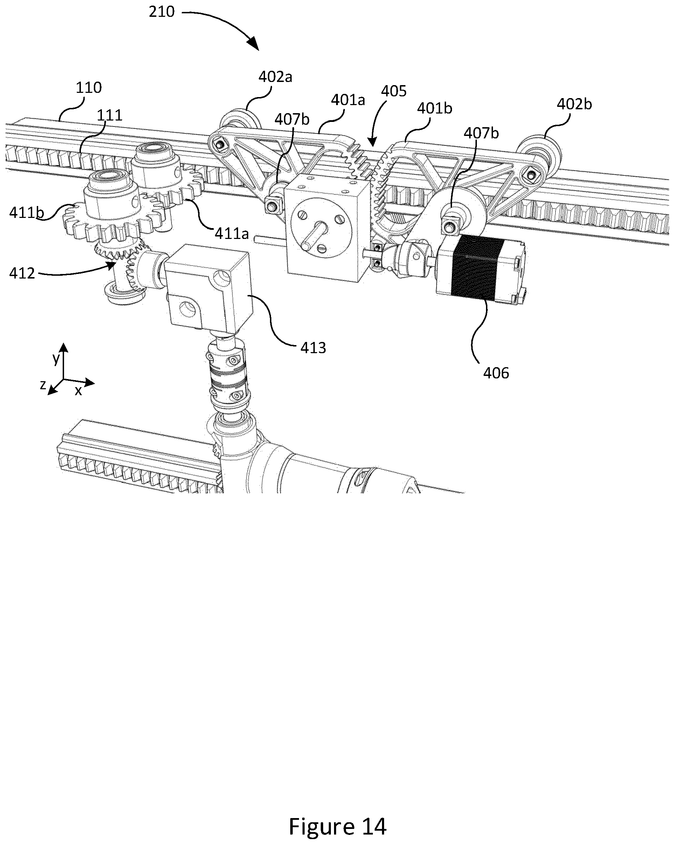

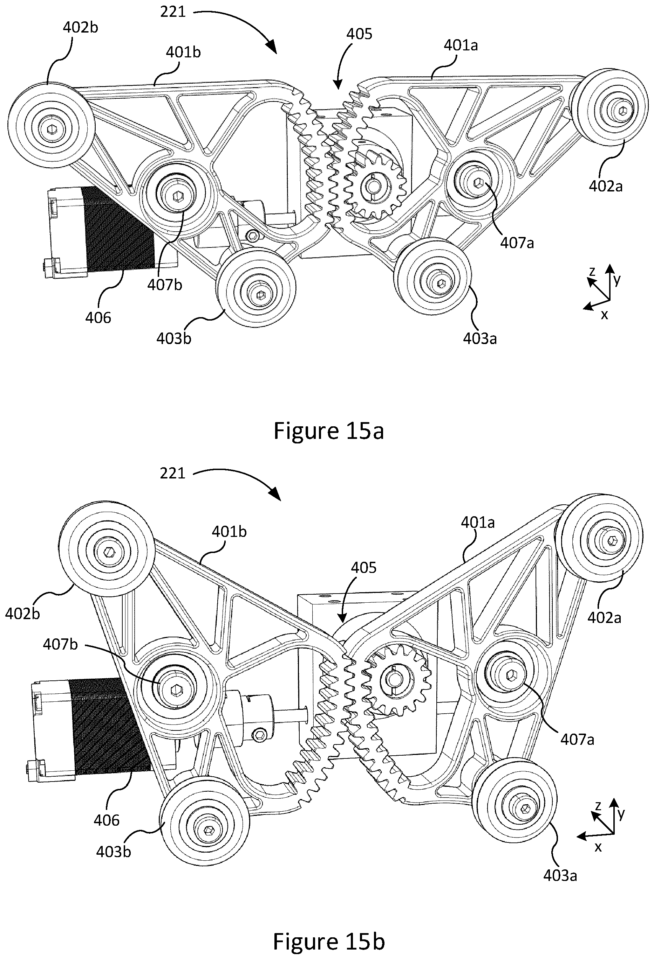

Any suitable gripping mechanism may be used which can releasably engage with the rails 110. For example, one or more of the gripping mechanisms 211, 221 may be a mechanical gripping mechanism (an example is shown in Figures 14, 15a, and 15b described below) arranged to physically engage with the rail 110. In other examples, the rails 110 may be magnetic (i.e. ferromagnetic), and one of more of the gripping mechanisms 211, 221 may comprise at least one electromagnet for selectively engaging with the rail 110 via the electromagnetic force. In further examples, one or more of the gripping mechanisms 211, 221 may comprise both mechanical and electromechanical means for gripping the rails 110. In yet further examples, another method is to use an air bearing, and shoot pressurised air through the bearing for a low friction cushion. A mechanical gripper may still be used to envelope the rail, with the air pressure providing a bearing solution. It is also noted that permanent magnets may be used to engage a foot arrangement with a rail 110. These permanent magnets may be selectively engaged by mechanically moving the magnets closer to the rail 110.

The gripping mechanism 211 of the first foot arrangement 210 and the gripping mechanism 221 of the second foot arrangement 220 do not need to be the same type.

The robot 200 also comprises at least one drive mechanism for propelling the robot 200 along the length of the rails 110. In some examples, the drive mechanism is be located within the main body of the robot 200 (rather than one or more of the foot arrangements). For example, the drive mechanism could be a propeller mounted on the main body that pushes the robot 200 along the rails.

In alternative or additional examples, at least one of the first foot arrangement 210 and second foot arrangement 220 comprises a drive mechanism for propelling the robot 200 along the length of the rail 110 with which that foot arrangement is currently engaged. In the example of Figure 2, the first foot arrangement 210 and second foot arrangement 220 are substantially the same in construction, with the first foot arrangement 210 comprising a first drive mechanism 212 and the second foot arrangement 220 comprising a second drive mechanism 222.

In an example, the drive mechanism may comprise a wheel with a high-friction surface for interacting with the rails 110. In another example, the drive mechanism may comprise a circular gear (either straight or helical) and the rails 110 comprise a linear gear with which the circular gear of the drive mechanism can engage.

In other examples, a single mechanism may provide the gripping mechanism 211 and the drive mechanism in one or more foot arrangements. For example, the rail 110 could be constructed of alternating permanent magnetic poles, and the single mechanism may comprise a plurality of electromagnets which can be selectively controlled to both engage the foot arrangement with and propel the foot arrangement along the rail 110 (in a similar manner to a stepper motor. An advantage of this is that the gripper and the rail drive (drive mechanism) is the same part, which could reduce the robot complexity and part count/cost. This sort of set up could also be reversed, with the robot comprising an array of permanent magnets and the rails comprising a plurality of electromagnets which are selectively controlled.

The end-effector 240 allows the robot 200 to interact with the items in the slots 120. The end-effector 240 may comprise one or more of: a grabber for removing items from and/or placing items into the slots 120; a reader for reading data from items in the slots 120; and a writer for writing data to items in the slots 120. To give the robot 200 a more stable base from which to interact with the items in the slots 120, it may be preferable to activate the end-effector 240 only when both foot arrangements 210, 220 are engaged with rails 110, but this is not essential.

The specific type of end-effector 240 depends on the type of items held in the slots 120. Examples of such items include physical storage media (e.g. made of laser-written silica glass, tapes or other optical media), or non-storage computing resources such as optical computation units, etc.

Another example of an end-effector 240 is a cleaning or maintenance apparatus. For example, a robot 200 having such a cleaning apparatus may roam the storage library system 100 to clean or otherwise maintain items in the slots 120. another example of an end-effector 240 is a camera. The robot 200 may send pictures of the items in the slots 120 and/or damage to parts of the storage library system 100 to another device (e.g. central control system 130) via the communications interface 260.

The robot 200 may comprise two or more end-effectors of the same or different types.

In some examples, the storage library system 100 comprises at least one robot 200 having an end-effector 240 of a first type, and at least one robot 200 having an end-effector 240 of a second type. This is particularly advantageous in the context of the present disclosure, where each robot 200 can transfer between rails 110, because each of the robots 200 can access overlapping portion so the storage library system 100. For example, one robot 200 might be a maintenance robot having a maintenance apparatus, and another robot 200 might be a read/write robot which accesses the items in the slots 120.

The transfer mechanism 230 allows the robot 200 to perform a transfer action (also called a rail-switching action) between the rails 110. Various specific types of transfer action are possible, which can depend on the particular construction of the robot 200, number of foot arrangements, arrangement of the rails 110, etc. Put generally, the transfer mechanism 230 is constructed and arranged to move the robot 200, while a first one or more of the foot arrangements remains engaged with a first of the rails, from a first position in which one or more of the foot arrangements is in abutment with a second of the rails to a second position in which one or more of the foot arrangements is in abutment with a third of the rails. In other words, the robot 200 may keep one or more of the foot arrangements engaged with one of the rails and use those one or more foot arrangements as an anchor to transfer between rails 110. The controller 250 may control the robot 200 to perform the transfer action.

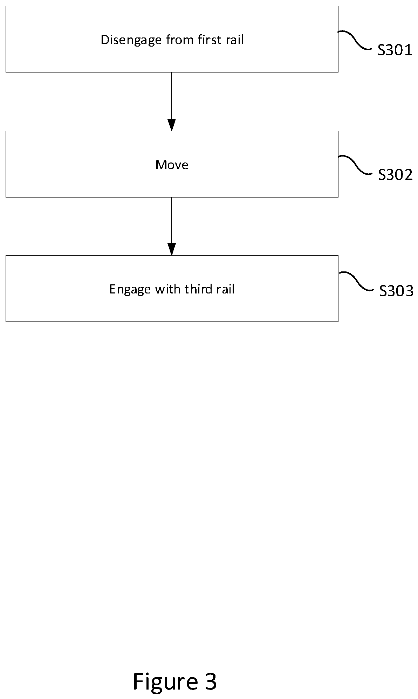

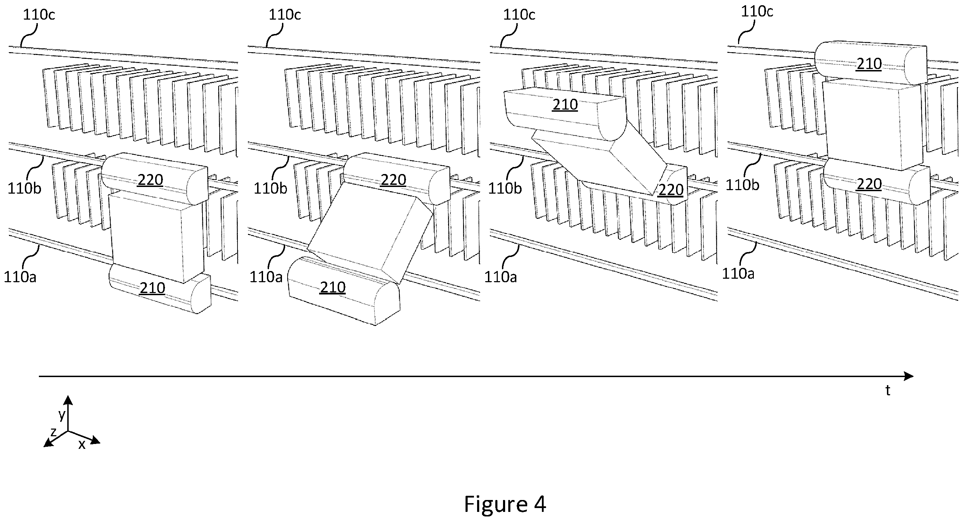

Figure 3 is a flow chart showing an example of the transfer action. Figure 4 shows a series of images of this example transfer action being performed by the robot 200. In this example, the robot 200 comprises two foot arrangements (as in the example of Figure 2). Initially, the robot 200 is in a first position in which the first foot arrangement 210 is engaged with the first rail 110a and the second foot arrangement 220 is engaged with the second rail 110b. The transfer action then proceeds as follow:

At S301, the controller 250 controls the first gripping mechanism 211 to disengage the first foot arrangement 210 from the first rail 110a. The first foot arrangement 210 may then remain in abutment with the first rail 110a (though it is no longer engaged with the first rail 110a).

At S302, the controller 250 controls the transfer mechanism 230 to move the robot 200, while the second foot arrangement 220 is engaged with the second rail 110b, such that the first foot arrangement 210 moves from being in abutment with the first rail 110a to being in abutment with the third rail 110c. In this example, moving S302 the robot 200 comprises rotating the robot 200 out of the plane of the rails 110 (the x-y plane) about the second foot arrangement 220. Specifically, the robot 200 is pivoted substantially 180 degrees around the second foot arrangement 220 with the second rail 110b being the axis of rotation. In other words, the second foot arrangement 200 (i.e. the one which remains engaged with a rail 110) is used as an anchor to move the robot 200. In this example, this movement S302 also comprises pivoting the first foot arrangement 210 (i.e. the ungripped side of the robot 200) a further 180 degrees in the same direction so it is the correct way up at the end of the pivot operation. Both these pivoting actions may be provided by the same transfer mechanism 230. An example transfer mechanism 230 for performing both these actions is described below with reference to Figure 14.

At S303, the controller 250 controls the first gripping mechanism 211 to engage the first foot arrangement 210 with the third rail 110c. This completes the transfer action.

It is appreciated that the motion shown in Figure 4 is only an example and that other motions are possible to move the robot 200 from the first position to the second position.

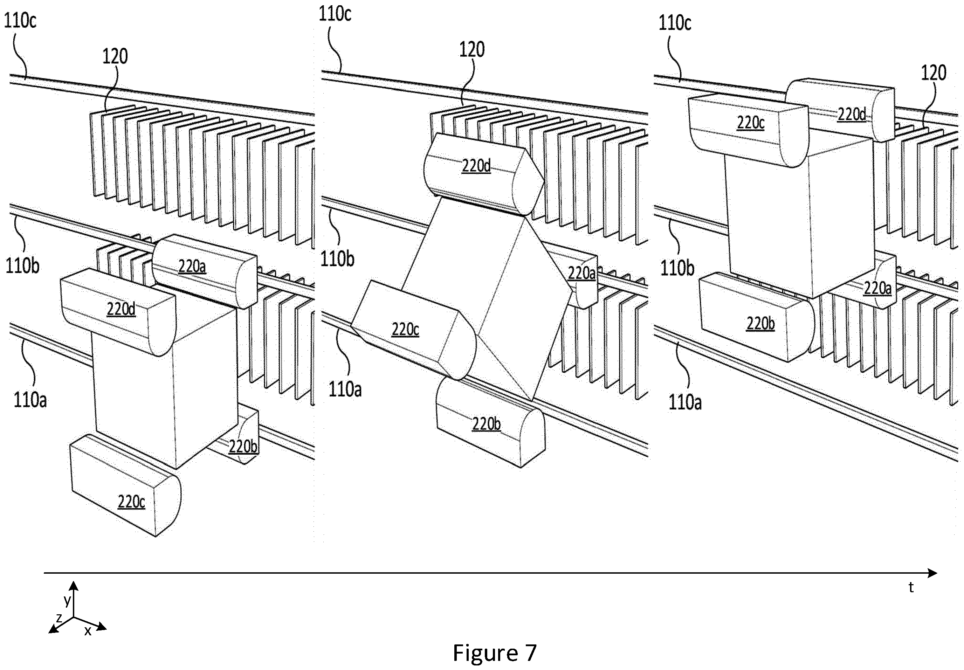

Figure 7 shows an example of a transfer action performed by a robot 200 having four foot arrangements 220a, 220b, 220c, 220d. The robot 200 in this example has a substantially square cross-section (in the y-z plane). The foot arrangements 220a, 220b, 220c, 220d are arranged on the x-direction edges of the body of the robot 200. Like the example of Figures 3 and 4, moving the robot 200 comprises rotating the robot 200 out of the plane of the rails 110 (the x-y plane) about the foot arrangement which remains anchored to one rail (foot arrangement 220a in this case). Note that in this example, the foot arrangement 220d which is brought into (new) abutment with a rail (the third rail 110c in this example) is not the same foot arrangement 220b which was disengaged with its rail 110a at the start of the transfer action. Like the earlier example, the foot arrangement 220d may be rotated in the same direction in order to correctly align with the new rail 110c for engagement. Similar constructions may be used in which the robot 200 has a cross-section with a different shape. Particularly suitable shapes are regular polygons including a triangle, square (as in the example of Figure 7), pentagon, hexagon, etc.

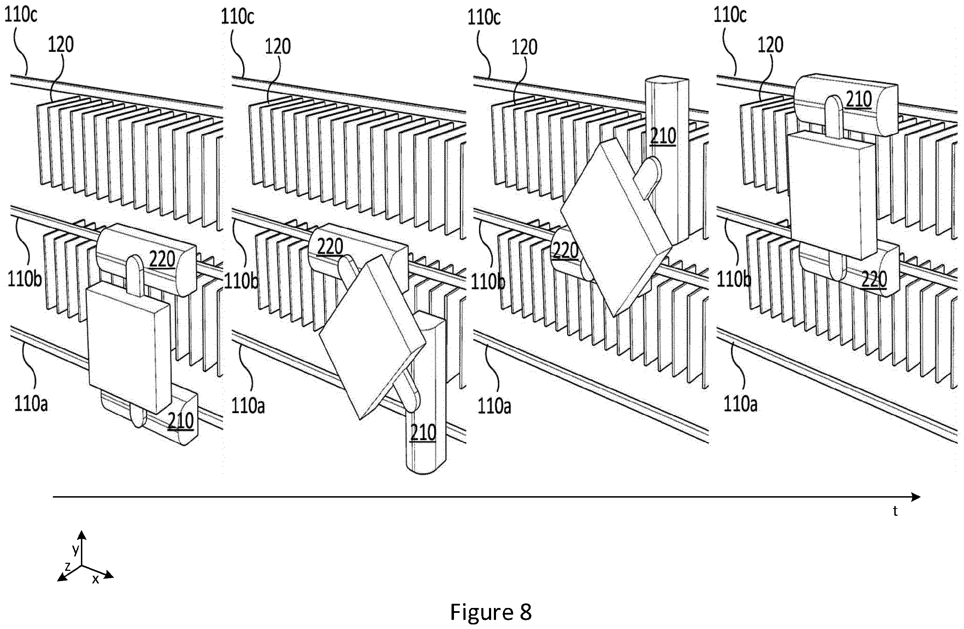

Figure 8 shows an example of a transfer action performed by a robot 200 comprising two foot arrangements 210, 220. In this example, the transfer mechanism 230 rotates the robot 200 in the plane of the rails 110 (the x-y plane) about the engaged foot arrangement (the second foot arrangement 220 in this example). Specifically, the robot 200 is pivoted substantially 180 degrees around the second foot arrangement 220 in the x-y plane. In examples, this movement also comprises pivoting the first foot arrangement 210 (i.e. the ungripped side of the robot 200) a further 180 degrees in the same direction so it is the correct way up at the end of the pivot operation. Both these pivoting actions may be provided by the same transfer mechanism 230. In other examples, the first foot arrangement 210 may be constructed as being able to engage with a rail in either orientation, in which case it does not need to be rotated itself before engaging with the new rail.

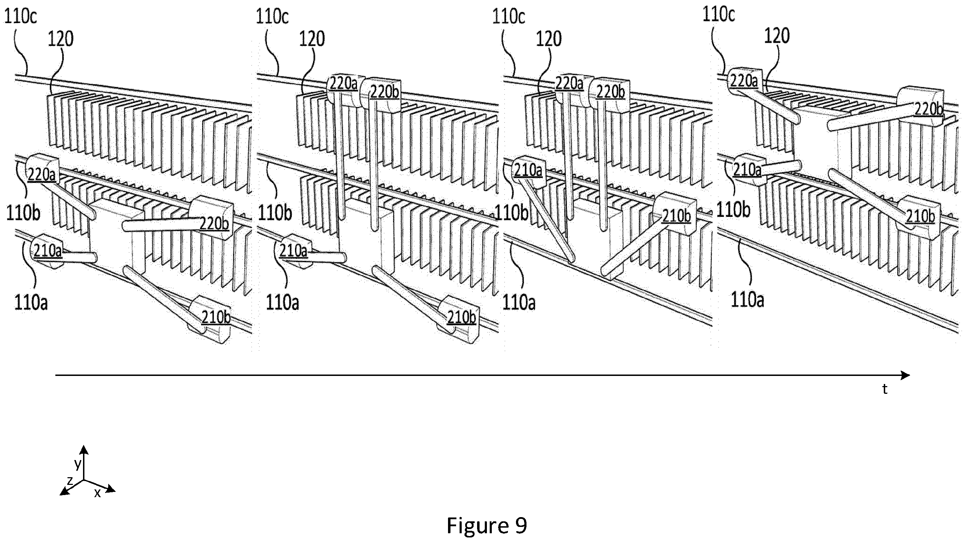

In some examples, the robot 200 may perform the transfer action in two or more stages, e.g. using a different one or more foot arrangements as the "anchor" for each stage. Figure 9 shows such an example. In this example, the robot 200 comprises four foot arrangements: two first foot arrangements 210a, 210b, and two second foot arrangements 220a, 220b. Each foot arrangement in this example is located on the end of a "leg". In this example, the transfer mechanism 230 translates the robot 200 in the plane of the rails 110 (the x-y plane) when performing the transfer action (i.e. without rotation in either of the directions described above).

Specifically, the robot 200 begins in a position in which the (two) first foot arrangements 210a, 210b are in abutment with the first rail 110a and the (two) second foot arrangements 220a, 220b are engaged with the second rail 110b. The transfer mechanism 230 then completes a first stage by using the first foot arrangements 210a, 210b as anchors to move the second foot arrangements 220a, 220b to the third rail 110c. Then, the transfer mechanism 230 completes a second stage by using the second foot arrangements 220a, 220b as anchors to move the first foot arrangements 210a, 210b to the second rail 110b. In examples, one or more of the "legs" may have a "knee".

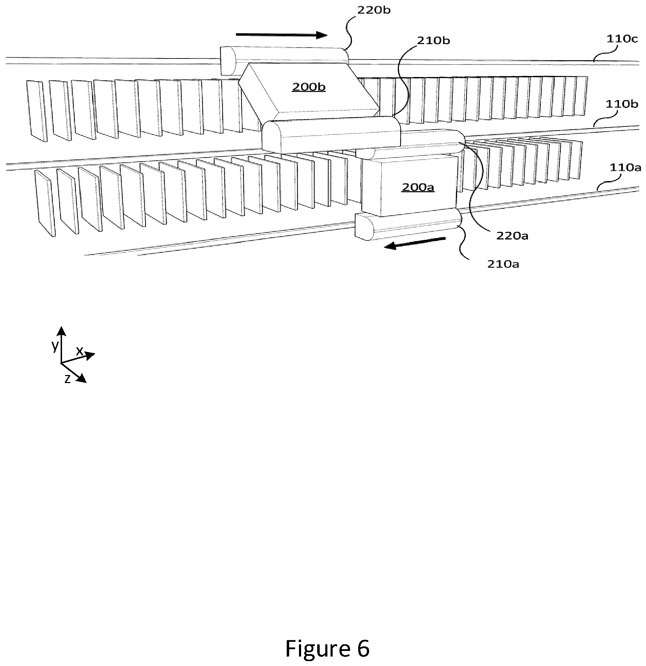

The ability of the robots 200 to perform the transfer action means that each robot 200 itself can move between rails 110 to access slots 120 on different rows 121. This has many advantages:
- The robot 200 is independent in the sense that they can move anywhere. Additional hardware (e.g. a vertical "elevator") for moving the robot 200 between rows 121 is not required.
- The robot 200 itself can retrieve items from and delivery items to slots 120 in any row 121, rather than needing to coordinate with other robots.
- The number of possible routes for the robot 200 to take from its current position to the position of a target slot 120 is increased massively. This means that the robots 200 can avoid each other (see example of Figure 6). It also means that the robots 200 can still navigate to the target slot 120 even if, for example, there is an issue with or blockage on a portion of one of the rails 110 which means the robot 200 cannot pass that particular portion. It also means that the robot 200 could potentially identify, and take, an optimal route to a target location within the library system 100.
- The robot 200 can easily be removed for maintenance.

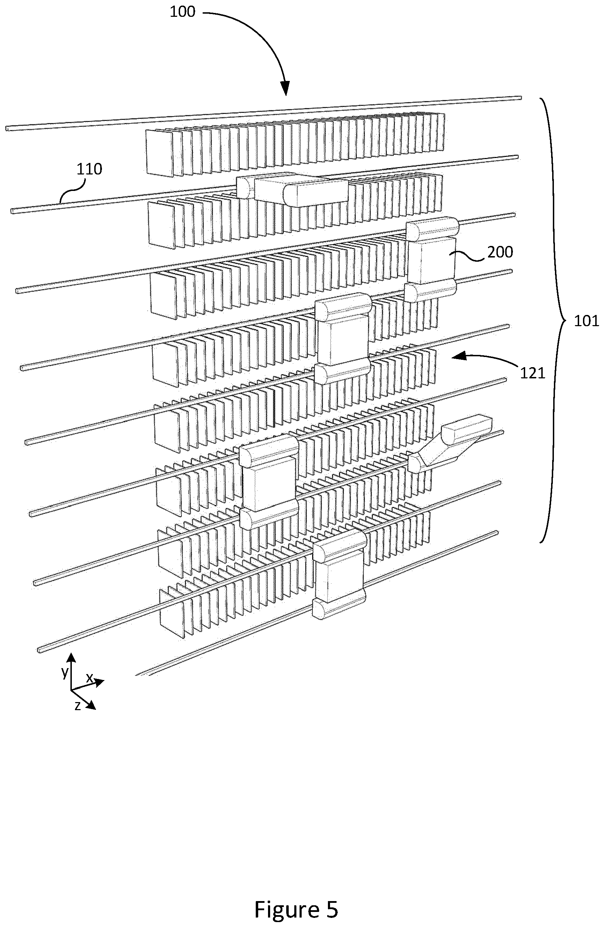

There may be a plurality, or "swarm", of identical robots 200 in the library system 100. An example is shown in Figure 5 in which there are six robots 200 in a library system 100 comprising eight rows 121 of slots 120 and nine rails 110 (using the same alternating rail-row arrangement of Figures 1 and 3). In Figure 5, a single "panel" 101 of slots 120 and rails 110 is shown. In other examples, described below, there may be more panels 101 present.

In some examples, the drive mechanism 212, 222 of one of the foot arrangements 210, 220 may activate when only that foot arrangement 210, 220 is engaged with a rail 110. That is, the robot 200 may move along a rail 110 with only a single foot arrangement 210, 220 engaged. This allows two robots 200 to pass one another using only minimal space. An example of such a passing action is illustrated in Figure 6.

In the example of Figure 6, there are two robots 200a, 200b. Only three rails 110a-c are shown for the sake of simplicity. The first robot 200a is in a first position in which its first foot arrangement 210a is engaged with the first rail 110a and its second foot arrangement 220a is engaged with the second rail 110b. The second robot 200b has its second foot arrangement 220b engaged with the third rail 110c, but the first foot arrangement 220a is not engaged with any rail 110. Specifically, the transfer mechanism (not shown) of the second robot 200b has been activated to rotate the first foot arrangement 210b of the second robot 200b out of the plane of the rails 110 and, in particular, out of the way of the first robot 200a. This means that the first robot 200a and second robot 200b can pass each other even though there are only three rails 110.

Further advantages are hence realized when there is a plurality of robots 200 in the storage library system 100. For example:
- The control system 130 can dynamically allocate robotic services to where it is needed during operation. This means that the control system 130 can balance service loads and be robust to failures.
- The system is more scalable because, e.g. more robots 200 can be added in (cf. prior art where robots on same rail cannot pass each other, so limited to one or two robots per rail. More can be used, but the utility of each robot, in the prior art, decreases with each additional robot)
- Adjacent shelves can share rail hardware which can reduce library costs and simplify the storage.

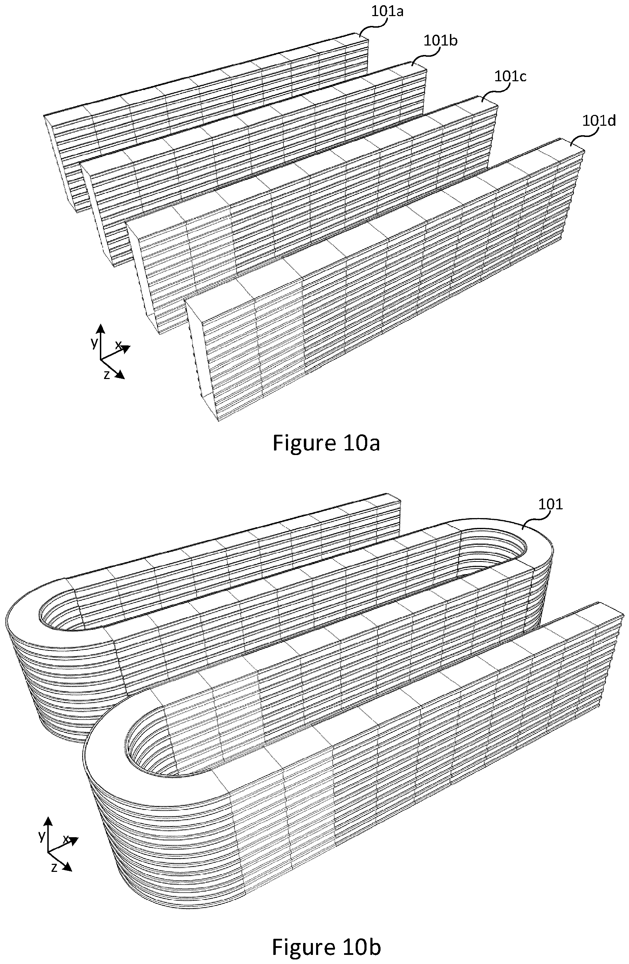

In yet further examples, the storage library system 100 may comprise a plurality of panels 101. An example is shown in Figure 10a in which the storage library system 100 comprises a series of four panels 101. Each panel 101 may have the construction as shown in the example of Figure 5 described earlier.

In this case, the robot 200 may also use the transfer mechanism 230 to transfer between a first panel 101 and a second panel 101 adjacent the first panel 101. To do so, the first foot arrangement 210 is disengaged from the first rail 110a as before, but then the robot 200 is moved to an orientation in which the first foot arrangement 210 is in abutment with a rail on a second panel 101 adjacent the first, before being engaged with that rail. The transfer mechanism 230 may then move the robot 200 again to bring the second foot arrangement 220 to meet another rail of the second panel 101.

A similar arrangement can be realized with a single panel 101 having a boustrophedonic ("snaking") plan, as shown in Figure 10b. This effectively elongates the horizontal dimension which the robots 200 use their primary drive system to move along (i.e. in the x direction, along the rail 110).

The example arrangement of Figure 10b also allows the robot to use the transfer mechanism 230 to transfer "across" the portions of the panel (in the same manner described above for transferring between different panels 101), though it is not necessary. This type of transfer provides an alternative, and potentially faster, route to the adjacent panel portion (than the robot 200 moving along the rail 110). It can also allow the robot 200 to avoid hardware failures and/or other robots in a similar manner to described above.

Figure 11 shows an example arrangement in which one or more drives 500 are located separately from the panels 101. The drives 500 may be, for example, one or more write drives 150 or one or more read drives 160 (as described above). At least one of the rails 110 extends from a panel 101 to the drives 500 in order to allow robots 200 to access the drives 500. Hence, another advantage of the transfer action is realized because all robots 200 can reach the drives 500 without requiring every rail 110 to be connected to the drives 500.

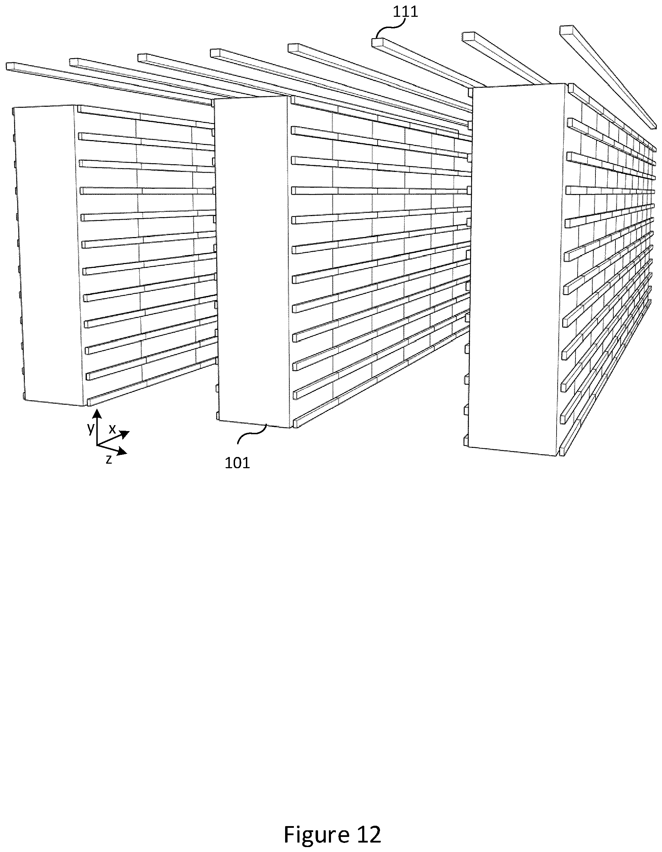

Figure 12 shows an example arrangement in which there is provided at least one non-panel rail 111. These non-panel rails 111 are rails with a similar construction to the (panel-) rails 110, but their location is such that the robot 200 cannot access items in the slots 120 when engaged with one of the non-panel rails 111. In this example, the non-panel rails 111 are located above the panels 101. The robot 200 may use these non-panel rails 111 to transfer between panels 101 and/or access other parts of the storage library system 100.

The storage library system 100 may comprise at least one localization feature for allowing the robot 200 to determine its location in the storage library system 100. The sensing system 280 of the robot 200 may be used to detect the at least one localization feature and thereby enable the robot 200 to determine its location within the storage library system 100.

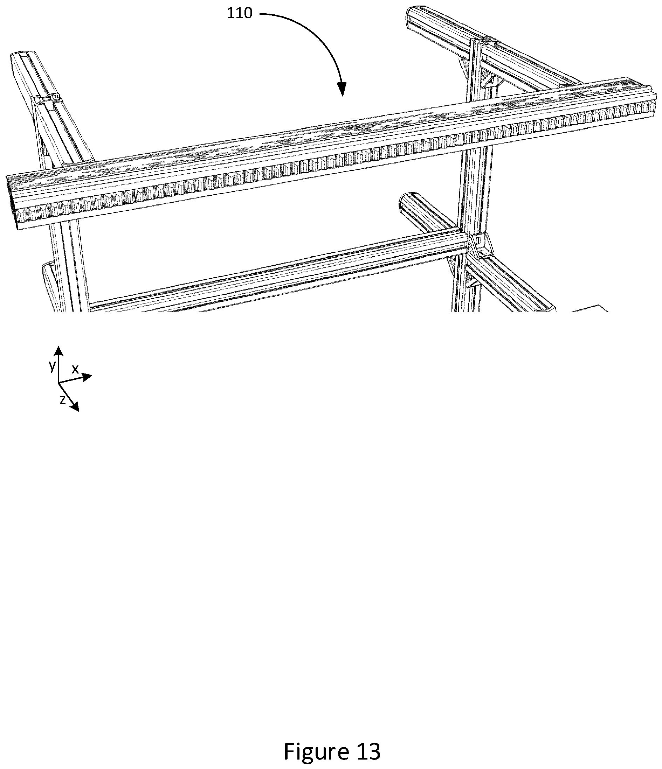

A first example of a localization feature is an RFID tag located on one of the rails. A second example of a localization feature is an optical linear code (e.g. a bar code or a Gray code). An example of a Gray code is shown in Figure 13. In some examples, each of the rails 110 comprises a respective localization feature.

In Figure 13, a Gray code is printed on one side (the top, in this example) of a rail 110. The Gray code may be an optical Gray code, a magnetic Gray code, or a capacitive Gray code. The sensing system 280 comprises, accordingly, an optical, magnetic, or capacitive sensor. By reading the Gray code at the current location of the robot 200, the robot 200 is able to uniquely determine its location.

In an example, the robot 200 comprises an internal location module configured to determine a location of the robot 200 in the media storage library system 200. This is particularly advantageous given the fact that, as mentioned, the robot 200 is free-roaming within the storage library system 100.

A specific example construction of the robot 200 will now be described with reference to Figures 14-16.

Figure 14 shows an example first foot arrangement 210. The construction of the second foot arrangement 220 may be substantially the same as that of the first foot arrangement 210 and is therefore not described in detail (the construction of the second foot arrangement 220 may be a mirror-image of that of the first foot arrangement 210).

The gripping mechanism 221 of this specific example is shown in more detail in Figures 15a and 15b (viewed from the other side relative to Figure 14). Figure 15a shows the gripping mechanism 221 in a first (closed) state, and Figure 15b shows the gripping mechanism 221 in a second (open) state.

In this example, the gripping mechanism 221 comprises a first frame 401a and a second frame 401b which pivot about a respective first pivot 407a and second pivot 407b. A gearing mechanism 405 is provided for counter-rotating the first frame 401a and second frame 401b. Each frame has one or more wheels for engaging with the rail 110 In this example, the first frame 401a comprises two wheels 402a, 403a and the second frame 401b also comprises two wheels 402b, 403b, though other arrangements are possible. Additional wheels may be provided (not shown in Figure 14), such as wheels which run on the front of the rails 110 to provide additional stability.

A motor 406 is provided which is operable to cause the gearing mechanism 405 to move the first frame 401a and second frame 401b between a closed state and an open state, such that the wheels grab and release the sides of the rail 110. The gripping mechanism 221 is shown in a closed state in Figure 15a and in an open state in Figure 15b.

The foot arrangement 210 shown in Figure 14 also comprises a drive mechanism 222 for propelling the robot 200 along the rail 110. In this example, the drive mechanism 222 comprises a first circular gear 411a and second circular gear 411b. The second circular gear 411b is driven by a motor 413 via a coupling link 412 (two orthogonal bevel gears in this example). The second circular gear 411b engages with the first circular gear 411a and, hence, in operation the first and second circular gears counter-rotate. In the arrangement shown in Figure 14, the first circular gear 411a engages with teeth 111 of the (front side of) the rail 110. In general, the first circular gear 411a will engage with the teeth 111 of any rail 110 to which the gripping mechanism 221 is currently engaged.

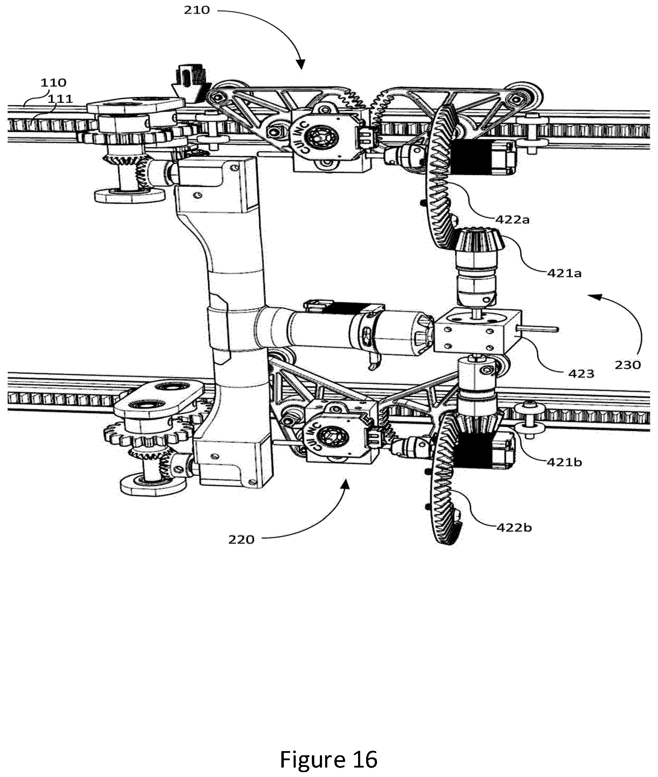

Figure 16 shows the transfer mechanism 230 of this specific example. The transfer mechanism comprises two rack-and-pinion arrangements, each comprising a pinion 421a, 421b (bevel gears) arranged to engage with a rack 422a, 422b having a curved profile around the x-axis. The pinions 421a, 421b are drivable by a transfer motor 423. When, for example, the first pinion 421a is driven, the first pinion 421a will rotate to move along the length of the curved rack 422a, thereby acting to rotate the first foot arrangement 210 relative to the main body of the robot 200. If the first foot arrangement 210 is engaged with a rail, this will cause the robot 200 to move in the manner described above in relation to Figure 4. If the first foot arrangement 210 is not engaged with a rail, this will cause the first foot arrangement 210 to rotate. The second pinion 421b and second rack 422b operate in a similar manner.

It will be appreciated that the examples described herein are to be understood as illustrative examples of embodiments of the invention. Further examples are given below.

The term "control module" may be used generally to refer to a module for controlling the robot 200 or robots of the storage library system 100. Such a control module maybe implemented, as noted earlier, at the controller 250 of the robot 200, at the central control system 130, or using any combination of the these. The control module may be configured to control the robot 200 to perform a transfer action by: controlling the gripping mechanism of one or more of the foot arrangements to disengage the one or more foot arrangements from the second rail; controlling the transfer mechanism to move the robot, while the first one or more of the foot arrangements remains engaged with the first of the rails, from the first position to the second position; and controlling the gripping mechanism of one or more of the foot arrangements to engage one or more of the foot arrangements with the third rail.

The foot arrangement which engages with the new rail may or may not be the same foot arrangement which disengaged from the old rail. Hence, the transfer mechanism may be constructed and arranged to move the robot, while a first foot arrangement remains engaged with a first of the rails, from a first position in which a second foot arrangement is in abutment with a second of the rails to a second position in which the second foot arrangements is in abutment with a third of the rails.

In an example, the storage library system comprises at least one localization feature for allowing the robot to determine its location in the storage library system. Example localization features include: an RFID tag located on at least one of the rails; an optical marking located on at least one of the rails. The robot may comprise a sensing system for detecting the localization feature to determine the robots' location in the storage library system. Examples of optical markings include barcodes, QR codes, and optical, magnetic or capacitive linear codes (e.g. Gray codes).

Moving the robot (by the transfer mechanism) from the first position to the second position may include one or more of: rotating the robot, about the first one or more foot arrangements, out of the plane of the rails; rotating the robot, about the first one or more foot arrangements, in the plane of the rails; and translating the robot in the plane of the rails.

In some examples, the end-effector may be arranged to interact with items on more than one side of the robot. This is advantageous in particular for examples in which the transfer action performed by the robot 200 involves the orientation of the robot 200 changing with respect to the slots 120. This can be achieved using a single end-effector which can move to access different sides of the robot 200, or using a plurality of end-effectors each arranged to operate relative to a different side of the robot 200 (e.g. one per "face"). For example, in the example of Figure 4, the robot 200 "flips" and therefore it would be preferable for the end-effector to be able to interact with items on either side of the robot 200. As another example, in the example of Figure 7, the robot 200 rotates 90 degrees per transfer action, presenting a different side of the robot 200 to the slots 120 and therefore it would be preferable for the end-effector to be able to interact with items on all four sides of the robot 200.

The end-effector may be, for example, at least one of a grabber; a reader; a writer; a camera; a maintenance apparatus; and a cleaning apparatus. The robot may comprise two or more end-effectors of the same or different types. It may be preferably to only activate the end-effector when the robot 200 is engaged with two or more rails, although this is not strictly necessary. That is, it is not excluded that the robot 200 might be able to access the slots 120 even when only engaged with a single rail (e.g. using a single foot arrangement).

At least some of the items stored in the storage library system may be physical storage media, and the storage library system may comprise at least one drive for reading and/or writing the physical storage media. The drive(s) may be separate from the robot(s), or the robot(s) may comprise one or more drive(s).

There may be two or more robots in the storage library system (i.e. two, three, four, five, etc.). In examples, there may be tens or even hundreds of robots. The robots may all be substantially identical or not, e.g. some of the robots may have different types of end-effectors.

In an example, the storage library system comprises a central control system for controlling the robot(s). In other examples, the robots may communicate with each other directly to cooperate.

In examples, the drive mechanism may be located in one of the foot arrangements. In such cases, the drive mechanism may be activatable while only the foot arrangement of the drive mechanism is engaged with a rail.

In examples, the slots are arranged in at least two different planes, and wherein the third rail to which the transfer mechanism moves the first foot arrangement is not located in the same plane as the first and second rail. This includes examples in which the slots are arranged in at least two panels occupying different planes (e.g. Figure 10a). The robot may be able to transfer from one panel to another using the transfer mechanism, e.g. by engaging with a rail of an adjacent panel, or by traversing one or more intermediate rails. This also includes examples in which the slots are arranged in a single, "snaking", panel (e.g. Figure 10b) and the robot is able to transfer from a first portion of the panel occupying a first plane so a second portion of the panel occupying a second, different plane from the first plane.

Described herein is a method of controlling a robot of a storage library system comprising a plurality of slots for storing items, a plurality of rails, the robot comprising: an end-effector for interacting with the items in the slots; at least two foot arrangements and a drive mechanism for moving the robot along the rails; the method comprising causing the robot to perform a transfer action by: controlling a gripping mechanism to disengage a first one or more of the foot arrangements from a first rail; controlling a transfer mechanism to move the robot, while a first one or more of the foot arrangements remains engaged with a first of the rails, from a first position in which one or more of the foot arrangements is in abutment with a second of the rails to a second position in which one or more of the foot arrangements is in abutment with a third of the rails; and controlling a gripping mechanism to engage the one or more of the foot arrangements with the third rail.

Generally, there is provided a robot for use in a storage library system comprising a plurality of slots for storing items and a plurality of rails. The robot comprises an end-effector for interacting with the items in the slots; at least two foot arrangements each having a respective gripping mechanism for releasably engaging the foot arrangement with one of the rails; a drive mechanism for moving the robot along the rails; and a transfer mechanism constructed and arranged to move the robot, while a first one or more of the foot arrangements remains engaged with a first of the rails, from a first position in which one or more of the foot arrangements is in abutment with a second of the rails to a second position in which one or more of the foot arrangements is in abutment with a third of the rails.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A storage library system (100) comprising:
a plurality of slots (120) for storing items;
a plurality of rails (110); and
a robot (200) for interacting with said items, the robot (200) comprising:
an end-effector (240) for interacting with the items in the slots (120);
at least two foot arrangements (210, 220);
a drive mechanism (222) for moving the robot (200) along the rails (110);
**characterized in that**:
the foot arrangements (210, 220) each have a respective gripping mechanism (211) for releasably engaging the foot arrangement (210, 220) with one of the rails (110); and
the robot (200) comprises a transfer mechanism (230) constructed and arranged to move the robot (200), while a first one or more of the foot arrangements (220) remains engaged with a first of the rails (110b), from a first position in which one or more of the foot arrangements (210) is in abutment with a second of the rails (110a) to a second position in which one or more of the foot arrangements (210) is in abutment with a third of the rails (110c).

2. The storage library system (100) of claim 1, comprising at least one localization feature for allowing the robot (200) to determine its location in the storage library system (100).

3. The storage library system (100) of claim 2, wherein the at least one localization feature comprises one or more of: an RFID tag located on at least one of the rails and readable by a sensing system (280) of the robot (200); an optical marking located on at least one of the rails (110) and readable by a sensing system (280) of the robot (200).

4. The storage library system (100) of any of claims 1 to 3, wherein the transfer mechanism (230) is constructed and arranged to move the robot (200) from the first position to the second position by rotating the robot (200), about the first one or more foot arrangements (220), out of the plane of the rails (110).

5. The storage library system (100) of any of claims 1 to 4, wherein the transfer mechanism (230) is constructed and arranged to move the robot (200) from the first position to the second position by rotating the robot (200), about the first one or more foot arrangements (220), in the plane of the rails (110).

6. The storage library system (100) of any of claims 1 to 5, wherein the transfer mechanism (230) is constructed and arranged to move the robot (200) from the first position to the second position by translating the robot (200) in the plane of the rails (110).

7. The storage library system (100) of any of claims 1 to 6, wherein each foot arrangement (210, 220) of the robot (200) is located on the end of a respective leg arrangement of the robot (200), and wherein the transfer mechanism (230) is constructed and arranged to move the robot (200) from the first position to the second position by moving at least one leg arrangement.

8. The storage library system (100) of any of claims 1 to 7, wherein at least some of the items stored in the storage library system (100) are physical storage media, and the storage library system (100) comprises at least one drive (150, 160) for reading and/or writing the physical storage media.

9. The storage library system (100) of any of claims 1 to 8, wherein the end-effector (240) is arranged to interact with items on either side of the robot (200).

10. The storage library system (100) of claim 9, wherein the end-effector (240) comprises at least one of a grabber; a reader; a writer; a camera; a maintenance apparatus; and a cleaning apparatus.

11. The storage library system (100) of any of claims 1 to 10, comprising two or more robots (200).

12. The storage library system (100) of any of claims 1 to 11, wherein the drive mechanism (222) is activatable while only the first one or more of the foot arrangements (220) is engaged with a rail (110).

13. The storage library system (100) of any of claims 1 to 12, wherein the slots (120) are arranged in at least two different planes (101), and wherein the third rail (110c) to which the transfer mechanism (230) moves the first foot arrangement (220) is not located in the same plane as the first and second rail (110b, 110a).

14. The storage library system (100) of any of claims 1 to 13, comprising a control module configured to control the robot (200) to perform a transfer action by:
controlling the gripping mechanism (211) of one or more of the foot arrangements (210) to disengage the one or more foot arrangements (210) from the second rail (110a);
controlling the transfer mechanism (230) to move the robot (200), while the first one or more of the foot arrangements (220) remains engaged with the first of the rails (110b), from the first position to the second position; and
controlling the gripping mechanism (211) of one or more of the foot arrangements (210) to engage one or more of the foot arrangements (211) with the third rail (110c).

15. A computer program for controlling a robot (200) of a storage library system (100) according to any of claims 1 to 14; wherein the computer program comprises instruction configured so as when executed by one or more processing units to cause the robot (200) to perform a transfer action by:
controlling a gripping mechanism (211) to disengage a first one or more of the foot arrangements (210) from a first rail (110a);
controlling a transfer mechanism (230) to move the robot (200), while a second one or more of the foot arrangements (220) remains engaged with a second of the rails (110b), from a first position in which the first one or more of the foot arrangements (210) is in abutment with the first of the rails (110a) to a second position in which one or more of the foot arrangements (210) is in abutment with a third of the rails (110c); and
controlling a gripping mechanism (211) to engage the one or more of the foot arrangements (211) with the third rail (110c).

## Patentansprüche

1. Speicherbibliothekssystem (100), umfassend:
eine Vielzahl von Steckplätzen (120) zum Speichern von Gegenständen;
eine Vielzahl von Schienen (110); und
einen Roboter (200) zum Interagieren mit den Gegenständen, wobei der Roboter (200) umfasst:
einen Endeffektor (240) zum Interagieren mit den Gegenständen in den Steckplätzen (120);
mindestens zwei Fußanordnungen (210, 220);
einen Antriebsmechanismus (222) zum Bewegen des Roboters (200) entlang der Schienen (110);
**dadurch gekennzeichnet, dass**:
die Fußanordnungen (210, 220) jeweils einen entsprechenden Greifmechanismus (211) zum lösbaren Eingreifen der Fußanordnung (210, 220) in eine der Schienen (110) aufweisen; und
der Roboter (200) einen Transfermechanismus (230) umfasst, der so gestaltet und angeordnet ist, dass er, während eine erste oder mehrere der Fußanordnungen (220) mit einer ersten der Schienen (110b) in Eingriff bleiben, den Roboter (200) aus einer ersten Position, in der eine oder mehrere der Fußanordnungen (210) an einer zweiten der Schienen (110a) anliegen, in eine zweite Position bewegt, in der eine oder mehrere der Fußanordnungen (210) an einer dritten der Schienen (110c) anliegen.

2. Speicherbibliothekssystem (100) nach Anspruch 1, umfassend mindestens ein Lokalisierungsmerkmal, das dem Roboter (200) ermöglicht, seinen Standort in dem Speicherbibliothekssystem (100) zu ermitteln.

3. Speicherbibliothekssystem (100) nach Anspruch 2, wobei das mindestens eine Lokalisierungsmerkmal eines oder mehreres umfasst aus: einem RFID-Tag, das sich auf mindestens einer der Schienen befindet und durch ein Erfassungssystem (280) des Roboters (200) lesbar ist; eine optische Markierung, die sich auf mindestens einer der Schienen (110) befindet und durch ein Erfassungssystem (280) des Roboters (200) lesbar ist.

4. Speicherbibliothekssystem (100) nach einem der Ansprüche 1 bis 3, wobei der Transfermechanismus (230) so gestaltet und angeordnet ist, dass er den Roboter (200) aus der ersten Position in die zweite Position bewegt, indem er den Roboter (200) um die erste oder mehrere Fußanordnungen (220) aus der Ebene der Schienen (110) herausdreht.

5. Speicherbibliothekssystem (100) nach einem der Ansprüche 1 bis 4, wobei der Transfermechanismus (230) so gestaltet und angeordnet ist, dass er den Roboter (200) aus der ersten Position in die zweite Position bewegt, indem er den Roboter (200) um die erste oder mehrere Fußanordnungen (220) in die Ebene der Schienen (110) dreht.

6. Speicherbibliothekssystem (100) nach einem der Ansprüche 1 bis 5, wobei der Transfermechanismus (230) so gestaltet und angeordnet ist, dass er den Roboter (200) durch Verschieben des Roboters (200) in der Ebene der Schienen (110) aus der ersten Position in die zweite Position bewegt.

7. Speicherbibliothekssystem (100) nach einem der Ansprüche 1 bis 6, wobei sich jede Fußanordnung (210, 220) des Roboters (200) am Ende einer jeweiligen Beinanordnung des Roboters (200) befindet und wobei der Transfermechanismus (230) so gestaltet und angeordnet ist, dass er den Roboter (200) durch Bewegen mindestens einer Beinanordnung aus der ersten Position in die zweite Position bewegt.

8. Speicherbibliothekssystem (100) nach einem der Ansprüche 1 bis 7, wobei mindestens einige der in dem Speicherbibliothekssystem (100) gespeicherten Elemente physische Speichermedien sind und das Speicherbibliothekssystem (100) mindestens ein Laufwerk (150, 160) zum Lesen und/oder Schreiben der physischen Speichermedien umfasst.

9. Speicherbibliothekssystem (100) nach einem der Ansprüche 1 bis 8, wobei der Endeffektor (240) so angeordnet ist, dass er mit Gegenständen auf beiden Seiten des Roboters (200) interagiert.

10. Speicherbibliothekssystem (100) nach Anspruch 9, wobei der Endeffektor (240) mindestens eines umfasst aus: einem Greifer, einer Lesevorrichtung; einer Schreibvorrichtung; einer Kamera; einer Wartungseinrichtung und einer Reinigungseinrichtung.

11. Speicherbibliothekssystem (100) nach einem der Ansprüche 1 bis 10, umfassend zwei oder mehr Roboter (200).

12. Speicherbibliothekssystem (100) nach einem der Ansprüche 1 bis 11, wobei der Antriebsmechanismus (222) aktivierbar ist, während nur die erste oder mehrere der Fußanordnungen (220) mit einer Schiene (110) in Eingriff stehen.

13. Speicherbibliothekssystem (100) nach einem der Ansprüche 1 bis 12, wobei die Steckplätze (120) in mindestens zwei unterschiedlichen Ebenen (101) angeordnet sind und wobei die dritte Schiene (110c), zu der der Transfermechanismus (230) die erste Fußanordnung (220) bewegt, sich nicht in derselben Ebene wie die erste und zweite Schiene (110b, 110a) befindet.

14. Speicherbibliothekssystem (100) nach einem der Ansprüche 1 bis 13, umfassend ein Steuermodul, das zum Steuern des Roboters (200) konfiguriert ist, sodass er eine Transferaktion durchführt durch:
Steuern des Greifmechanismus (211) einer oder mehrerer der Fußanordnungen (210), um die eine oder mehrere Fußanordnungen (210) von der zweiten Schiene (110a) zu lösen;
Steuern des Transfermechanismus (230), um den Roboter (200) aus der ersten Position in die zweite Position zu bewegen, während die erste oder mehrere der Fußanordnungen (220) mit der ersten der Schienen (110b) in Eingriff bleiben; und
Steuern des Greifmechanismus (211) einer oder mehrerer der Fußanordnungen (210), um eine oder mehrere der Fußanordnungen (211) mit der dritten Schiene (110c) in Eingriff zu bringen.

15. Computerprogramm zum Steuern eines Roboters (200) eines Speicherbibliothekssystems (100) nach einem der Ansprüche 1 bis 14, wobei das Computerprogramm Anweisungen umfasst, die so konfiguriert sind, dass sie, wenn sie durch eine oder mehrere Verarbeitungseinheiten ausgeführt werden, den Roboter (200) veranlassen, eine Transferaktion durchzuführen durch:
Steuern eines Greifmechanismus (211), um eine erste oder mehrere der Fußanordnungen (210) von einer ersten Schiene (110a) zu lösen;
Steuern eines Transfermechanismus (230), um, während eine zweite oder mehrere der Fußanordnungen (220) mit einer zweiten der Schienen (110b) in Eingriff bleiben, den Roboter (200) aus einer ersten Position, in der die erste oder mehrere der Fußanordnungen (210) an der ersten der Schienen (110a) anliegen, in eine zweite Position zu bewegen, in der eine oder mehrere der Fußanordnungen (210) an einer dritten der Schienen (110c) anliegen; und
Steuern eines Greifmechanismus (211), um die eine oder mehrere der Fußanordnungen (211) mit der dritten Schiene (110c) in Eingriff zu bringen.

## Revendications

1. Système de bibliothèque de stockage (100) comprenant :
une pluralité de fentes (120) pour stocker des articles ;
une pluralité de rails (110) ; et
un robot (200) destiné à interagir avec lesdits articles, le robot (200) comprenant :
un effecteur terminal (240) destiné à interagir avec les articles dans les fentes (120) ;
au moins deux agencements de pieds (210, 220) ;
un mécanisme d'entraînement (222) destiné à déplacer le robot (200) le long des rails (110) ;
**caractérisé en ce que** :
les agencements de pieds (210, 220) ont chacun un mécanisme de préhension (211) respectif pour insérer en prise de manière amovible l'agencement de pieds (210, 220) dans l'un des rails (110) ; et
le robot (200) comprend un mécanisme de transfert (230) construit et agencé pour déplacer le robot (200), tandis qu'un ou plusieurs premiers agencements parmi les agencements de pieds (220) restent insérés en prise dans un premier rail parmi les rails (110b), d'une première position dans laquelle un ou plusieurs des agencements de pieds (210) sont en butée avec un deuxième rail parmi les rails (110a) à une seconde position dans laquelle un ou plusieurs des agencements de pieds (210) sont en butée avec un troisième rail parmi les rails (110c).

2. Système de bibliothèque de stockage (100) selon la revendication 1, comprenant au moins une fonctionnalité de localisation pour permettre au robot (200) de déterminer son emplacement dans le système de bibliothèque de stockage (100).

3. Système de bibliothèque de stockage (100) selon la revendication 2, dans lequel l'au moins une fonctionnalité de localisation comprend un ou plusieurs éléments parmi : une étiquette RFID située sur au moins l'un des rails et lisible par un système de détection (280) du robot (200) ; un marquage optique situé sur au moins l'un des rails (110) et lisible par un système de détection (280) du robot (200).

4. Système de bibliothèque de stockage (100) selon l'une quelconque des revendications 1 à 3, dans lequel le mécanisme de transfert (230) est construit et agencé pour déplacer le robot (200) de la première position à la seconde position en faisant tourner le robot (200) autour du premier ou des premiers agencements de pieds (220), hors du plan des rails (110).

5. Système de bibliothèque de stockage (100) selon l'une quelconque des revendications 1 à 4, dans lequel le mécanisme de transfert (230) est construit et agencé pour déplacer le robot (200) de la première position à la seconde position en faisant tourner le robot (200) autour du premier ou des premiers agencements de pieds (220), dans le plan des rails (110).

6. Système de bibliothèque de stockage (100) selon l'une quelconque des revendications 1 à 5, dans lequel le mécanisme de transfert (230) est construit et agencé pour déplacer le robot (200) de la première position à la seconde position par translation du robot (200) dans le plan des rails (110).

7. Système de bibliothèque de stockage (100) selon l'une quelconque des revendications 1 à 6, dans lequel chaque agencement de pieds (210, 220) du robot (200) est situé à l'extrémité d'un agencement de pieds respectif du robot (200), et dans lequel le mécanisme de transfert (230) est construit et agencé pour déplacer le robot (200) de la première position à la seconde position par déplacement d'au moins un agencement de pieds.

8. Système de bibliothèque de stockage (100) selon l'une quelconque des revendications 1 à 7, dans lequel au moins certains des éléments stockés dans le système de bibliothèque de stockage (100) sont des supports d'enregistrement physiques, et le système de bibliothèque de stockage (100) comprend au moins un lecteur (150, 160) pour lire le support d'enregistrement physique et/ou écrire dessus.

9. Système de bibliothèque de stockage (100) selon l'une quelconque des revendications 1 à 8, dans lequel l'effecteur terminal (240) est agencé pour interagir avec des articles de chaque côté du robot (200).

10. Système de bibliothèque de stockage (100) selon la revendication 9, dans lequel l'effecteur terminal (240) comprend au moins un élément parmi un dispositif de saisie ; un lecteur ; un scripteur ; une caméra ; un appareil de maintenance ; et un appareil de nettoyage.

11. Système de bibliothèque de stockage (100) selon l'une quelconque des revendications 1 à 10, comprenant au moins deux robots (200).

12. Système de bibliothèque de stockage (100) selon l'une quelconque des revendications 1 à 11, dans lequel le mécanisme d'entraînement (222) peut être activé tandis que seul le premier ou les premiers agencements parmi les agencements de pieds (220) sont insérés en prise dans un rail (110).

13. Système de bibliothèque de stockage (100) selon l'une quelconque des revendications 1 à 12, dans lequel les fentes (120) sont agencées dans au moins deux plans différents (101), et dans lequel le troisième rail (110c) vers lequel le mécanisme de transfert (230) déplace le premier agencement de pieds (220) n'est pas situé dans le même plan que les premier et deuxième rails (110b, 110a).

14. Système de bibliothèque de stockage (100) selon l'une quelconque des revendications 1 à 13, comprenant un module de commande configuré pour commander le robot (200) afin qu'il effectue une action de transfert par :
commande du mécanisme de préhension (211) d'un ou plusieurs des agencements de pieds (210) pour désolidariser le ou les agencements de pieds (210) du deuxième rail (110a) ;
le fait d'amener le mécanisme de transfert (230) à déplacer le robot (200), tandis que le premier ou les premiers agencements de pieds (220) restent insérés en prise dans le premier rail parmi les rails (110b), de la première position à la seconde position ; et
commande du mécanisme de préhension (211) d'un ou plusieurs des agencements de pieds (210) pour insérer en prise un ou plusieurs des agencements de pieds (211) dans le troisième rail (110c).

15. Programme informatique pour commander un robot (200) d'un système de bibliothèque de stockage (100) selon l'une quelconque des revendications 1 à 14 ; dans lequel le programme informatique comprend des instructions configurées de manière à ce qu'une fois exécutées par une ou plusieurs unités de traitement, elles amènent le robot (200) à effectuer une action de transfert par :
commande d'un mécanisme de préhension (211) pour désolidariser un premier ou des premiers agencements de pieds (210) d'un premier rail (110a) ;
commande d'un mécanisme de transfert (230) pour déplacer le robot (200), tandis qu'un second ou plusieurs seconds agencements de pieds (220) restent insérés en prise dans un deuxième rail parmi les rails (110b), d'une première position dans laquelle le premier ou plusieurs premiers agencements de pieds (210) sont en butée avec le premier rail parmi les rails (110a) à une seconde position dans laquelle un ou plusieurs des agencements de pieds (210) sont en butée avec un troisième rail parmi les rails (110c) ; et
commande d'un mécanisme de préhension (211) pour insérer en prise le ou les agencements de pieds (211) dans le troisième rail (110c).
